# EUROPEAN PATENT APPLICATION

(11) **EP 4 589 754 A1**
(43) Date of publication of application: **23.07.2025**
(21) Application number: 22965394.4
(22) Date of filing: 14.11.2022
(51) Int. Cl.: H01M 50/531, H01M 50/543, H01M 50/502

(54) **END COVER ASSEMBLY, BATTERY CELL, BATTERY, AND ELECTRICAL APPARATUS**

(71) Applicant: CONTEMPORARY AMPEREX TECHNOLOGY (HONG KONG) LIMITED, Hong Kong (HK)
(72) Inventor: YANG, Kaihuan, Ningde, Fujian 352100 (CN); XIE, Yongfeng, Ningde, Fujian 352100 (CN); ZHOU, Wenlin, Ningde, Fujian 352100 (CN); KE, Haibo, Ningde, Fujian 352100 (CN); LI, Quankun, Ningde, Fujian 352100 (CN)
(74) Representative: Ziebig Hengelhaupt Intellectual Property Attorneys Patentanwaltskanzlei PartGmbB
(86) International application number: PCT/CN2022/131619
(87) International publication number: WO 2024/103201

(57) **Abstract**

Embodiments of the present application provide a battery cell, a battery and an electricity-consuming device. The battery cell includes a casing, an electrode assembly and an end cover assembly. The end cover assembly for the battery cells includes an end cover and an electrode terminal, and the end cover is provided with an electrode lead-out hole. The electrode terminal includes a connecting part and a terminal main body, and the terminal main body protrudes from the connecting part and is at least partially accommodated in the electrode lead-out hole. The connecting part is provided with a groove, which can reduce a weight of the battery cell and save an internal space of the battery cell, thereby improving the energy density of the battery cell.

## Description

### TECHNICAL FIELD

The present application relates to the technical field of batteries, and in particular to an end cover assembly, a battery cell, a battery and an electricity-consuming device.

### BACKGROUND

A battery cell is widely used in an electricity device, such as a mobile phone, a laptop, a battery vehicle, an electric car, an electric plane, an electric ship, an electric toy car, an electric toy ship, an electric toy plane and an electric tool. The battery cell may include a cadmium nickel battery cell, a hydrogen nickel battery cell, a lithium-ion battery cell, a secondary alkaline zinc manganese battery cell or the like.

In the development of battery technology, how to improve the energy density of the battery cell becomes a research direction in the battery technology.

### SUMMARY

The present application provides an end cover assembly, a battery cell, a battery and an electricity-consuming device, which can improve the energy density of the battery cell.

In a first aspect, embodiments of the present application provide an end cover assembly for a battery cell including an end cover and an electrode terminal. The end cover includes an electrode lead-out hole. The electrode terminal includes a connecting part and a terminal main body. The terminal main body protrudes from the connecting part and is at least partially accommodated in the electrode lead-out hole. The connecting part is provided with a groove.

In the above solution, the terminal main body is accommodated in the electrode lead-out hole of the end cover, and the electrical energy can be led out through the terminal main body. By providing the groove on the connecting part, the electrode tab or other parts of the electrode terminal of the battery cell can be accommodated in the groove, so that the weight of the battery cell can be reduced, an internal space of the battery cell can be saved and the energy density of the battery cell can be improved.

In some embodiments, the connecting part includes a first connecting sub-part and a second connecting sub-part, the second connecting sub-part is connected between the terminal main body and the first connecting sub-part, and a thickness of the second connecting sub-part is smaller than a thickness of the first connecting sub-part to form the groove.

In the above solution, the terminal main body is connected to the first connecting sub-part with a relatively large thickness, so that the connection strength between the terminal main body and the connecting part can be improved and the stability of the terminal main body can be improved.

In some embodiments, the groove is provided on a surface of the connecting part facing an electrode assembly of the battery cell, which can facilitate the electrode tab or other parts of the electrode assembly being accommodated in the groove, facilitate the process preparation, and improve the production efficiency.

In some embodiments, a surface of the first connecting sub-part facing the end cover is flush with a surface of the second connecting sub-part facing the end cover, so that the support capacity of the connecting part for the end cover can be improved and the strength of the end cover assembly can be improved.

In some embodiments, in a thickness direction of the end cover, a thickness of the second connecting sub-part is H1, a thickness of the first connecting sub-part is H2, and 1/5 H2≤H1≤4/5 H2, so that the weight and the internal capacity of the battery cell can be reduced and the strength of the second connecting sub-part can be ensured.

In some embodiments, the first connecting sub-part and the second connecting sub-part are arranged in a first direction; at least one end of the second connecting sub-part extends beyond the first connecting sub-part in a second direction, and each two of the first direction, the second direction and a thickness direction of the end cover are perpendicular to each other.

In the above solution, at least one end of the second connecting sub-part extends beyond the first connecting sub-part, so that the weight of the connecting part can be further reduced, the internal space of the battery cell can be save, and the energy density of the battery cell can be improved.

In some embodiments, the connecting part includes two second connecting sub-parts, and the two second connecting sub-parts are located on two sides of the first connecting sub-part in the first direction, respectively; the electrode terminal is provided with a weight-reducing groove, which is located on a side of the first connecting sub-part in the second direction and is formed and enclosed by the first connecting sub-part and the two second connecting sub-parts.

In the above solution, two second connecting sub-parts are located on the two sides of the first connecting sub-part in the first direction, respectively, so that both two electrode assemblies can be connected to the end cover assembly, and the energy density of the battery cell can be improved. The weight-reducing groove is formed and enclosed by the first connecting sub-part and the two second connecting sub-parts, which can not only reduce the weight of the end cover assembly, save the internal space of the battery cell, further improve the energy density of the battery cell, but also provide more connection space for the parts connected to the second connecting sub-part.

In some embodiments, the end cover assembly further includes a sealing member, which is arranged around the terminal main body; at least a portion of the sealing member is clamped between the end cover and the connecting part, and a projection of the weight-reducing groove does not overlap with a projection of the sealing member in the thickness direction of the end cover.

In the above solution, the sealing member can enhance the sealing effect between the end cover and the electrode terminal, reduce the probability of the leakage of the battery cell, and improve the safety performance of the battery cell. In the thickness direction of the end cover, the projection of the weight-reducing groove does not overlap with the projection of the sealing member, so that the compression amount of the sealing member can be improved and the safety performance of the battery cell can be further enhanced.

In some embodiments, the connecting part includes an electrode tab connecting segment and a fusing segment, the fusing segment is located between the electrode tab connecting segment and the terminal main body, and the electrode tab connecting segment is configured to connect an electrode tab of an electrode assembly.

In the above solution, by arranging the fusing segment, the battery cell can be melted in time under an external short working condition, which can be less prone to fire and explosion, and improve the safety performance of the battery cell.

In some embodiments, the end cover assembly further includes a sealing member, which is arranged around the terminal main body, at least a portion of the sealing member is clamped between the end cover and the connecting part, and a projection of the sealing member does not overlap with a projection of the groove in a thickness direction of the end cover.

In the above solution, the sealing member can enhance the sealing effect between the end cover and the electrode terminal, reduce the probability the leakage of the battery cell, and improve the safety performance of the battery cell. In the thickness direction of the end cover, the projection of the sealing member does not overlap with the projection of the groove, so that the compression amount of the sealing member can be improved and the safety performance of the battery cell can be further enhanced.

In a second aspect, embodiments of the present application provide a battery cell, including a casing, an electrode assembly and the end cover assembly according to any one of the embodiments as described above. The casing is provided with an opening; the electrode assembly is accommodated in the casing; the end cover is configured to cover the opening, and the connecting part is located inside the battery cell.

In some embodiments, the electrode assembly includes an electrode tab, which is connected to the connecting part, and at least a portion of the electrode tab is accommodated in the groove, so that the weight of the battery cell can be reduced, the space occupied by the electrode tab can be saved, and the energy density of battery cell can be improved.

In some embodiments, the electrode tab includes a horizontal segment directly connected to the connecting part, and a thickness of the horizontal segment is less than or equal to a depth of the groove in a thickness direction of the end cover, so that the space occupied by the electrode tab can be further saved.

In a third aspect, embodiments of the present application provide a battery including the battery cell according to any one of the embodiments as described above.

In a fourth aspect, embodiments of the present application provide an electric-consuming device including the battery cell according to any one of the embodiments as described above, which is configured to supply electric power.

### BRIEF DESCRIPTION OF THE DRAWINGS

In order to more clearly illustrate the technical solutions of the embodiments of the present application, the drawings to be used in the description of the embodiments of the present application will be described briefly below. Obviously, the drawings in the following description are merely some embodiments of the present application. For those skilled in the art, other drawings can also be obtained according to these drawings without the inventive labor.
Fig. 1 shows a schematic view of a vehicle according to some embodiments of the present application;
Fig. 2 shows a structural schematic view of a battery according to some embodiments of the present application;
Fig. 3 shows a structural schematic view of a battery module shown in Fig. 2;
Fig. 4 shows an exploded schematic view of a battery cell according to some embodiments of the present application;
Fig. 5 shows a cross-sectional schematic view of a battery cell in some embodiments of the present application;
Fig. 6 shows a schematic view of an end cover assembly according to some embodiments of the present application;
Fig. 7 shows a schematic view of a connecting part according to some embodiments of the present application;
Fig. 8 shows a structural schematic view of a connecting part shown in Fig. 6 at another angle;
Fig. 9 shows an enlarged schematic view of part A shown in Fig. 8;
Fig. 10 shows a schematic view of a connecting part according to some other embodiments of the present application;
Fig. 11 shows a structural schematic view of a connecting part shown in Fig. 10 at another angle;
Fig. 12 shows a schematic view of a connecting part according to some other embodiments of the present application;
Fig. 13 shows a schematic view of a connecting part according to some other embodiments of the present application;
Fig. 14 shows a structural schematic view of a connecting part shown in Fig. 13 at another angle;
Fig. 15 shows a top view of a battery cell according to some embodiments of the present application; and
Fig. 16 is a partial schematic view of a battery cell according to some embodiments of the present application.

In the drawings, the drawings are not drawn to actual scale.

The reference numerals are listed as follows:
vehicle 1000; battery 100; controller 200; motor 300; housing 10; upper cover 10a; lower cover 10b; battery module 400; battery cell 20; casing 22; end cover 21; electrode terminal 26; electrode assembly 23; main body part 231; electrode tab 232; vertical segment 232a; horizontal segment 232b; end cover assembly 500; electrode lead-out hole 21a; connecting part 30; groove 30a; first connecting sub-part 31; second connecting sub-part 32; electrode tab connecting segment 321; fusing segment 322; through hole 32a; weight-reducing groove 30b; terminal main body 40; sealing member 41; thickness direction X; first direction Y; second direction Z.

### DETAILED DESCRIPTION

In order to make the objects, technical solutions and advantages of the embodiments of the present application more clear, the technical solutions of the embodiments of the present application will be clearly and completely described below in conjunction with the drawings of the embodiments of the present application. It is apparent that the described embodiments are a portion of the embodiments of the present application, and not all of them. Based on the embodiments of the present application, all other embodiments obtained by those skilled in the art without the creative labor fall within the scope of the present application.

Unless otherwise defined, technical terms or scientific terms used in the present disclosure should be interpreted according to common meanings thereof as commonly understood by those of ordinary skills in the art. The terms used in the description in the present application are only for the purpose of describing specific embodiments and are not intended to limit the present application. The terms "including" and "having" in the description and the claims of the present application and the above description of the drawings, and any variations thereof are intended to cover non-exclusive inclusions. The terms "first", "second", etc. in the description and the claims of the present application or the above-mentioned drawings are used to distinguish different objects, rather than to describe a specific order or a primary-secondary relationship.

The "embodiments" referred in the present application means that specific features, structures or characteristics described in conjunction with the embodiments may be included in at least one embodiment of the present application. This word appeared in various places in the description does not necessarily refer to the same embodiment, nor is it an independent or alternative embodiment mutually exclusive with other embodiments.

In the description of the present application, it should be noted that, unless otherwise clearly specified and limited, the terms "mount", "connecting" and "connection" and "attach" should be understood in a broad sense, for example, it can be a fixed connection, a detachable connection, or an integral connection, it can be connected directly, it can be connected indirectly through an intermedium, or it can be a communication between two elements at insides thereof. For those of ordinary skill in the art, the specific meaning of the above-mentioned terms in the present application can be understood according to specific situations.

The term "and/or" in the present application is merely an association relationship describing associated objects, which means that there can be three types of relationships. For example, "A and/or B" can mean three cases that there is only A, there are A and B at the same time, and there is only B. In addition, the punctuation mark "/" in the present application generally indicates that the related objects of the preceding content and following content are in an "or" relationship.

In the embodiments of the present application, the same reference numerals denote the same parts, and for the sake of brevity, in different embodiments, detailed descriptions of the same parts are omitted. It should be understood that the thickness, length, width and other sizes of the various parts in the embodiments of the present application shown in the drawings, as well as the overall thickness, length and width, etc., of the integrated device are only exemplary descriptions, and should not constitute any limitation to the present application.

The "plurality" in the present application refers to two or more (including two).

In the present application, a battery cell may include a lithium-ion secondary battery cell, a lithium-ion primary battery cell, a lithium-sulfur battery cell, a sodium lithium ion battery cell, a sodium ion battery cell, a magnesium ion battery cell or the like, which is not limited in the embodiments of the present application. The battery cell can be in a shape of a cylinder, a flatten body, a cuboid or other shapes, which is not limited in the embodiments of the present application.

In the present application, a battery cell may include a lithium-ion secondary battery, a lithium-ion primary battery, a lithium-sulfur battery, a sodium lithium ion battery, a sodium ion battery, a magnesium ion battery or the like, which is not limited in the embodiments of the present application. The battery cell can be in a shape of a cylinder, a flatten body, a cuboid or other shapes, which is not limited in the embodiments of the present application. Generally, the battery cell includes three types according to a packaging method: a cylindrical battery cell, a cuboid and square battery cell, and a soft packing battery cell, which is not limited in the embodiments of the present application.

The battery mentioned in the embodiments of the present application refers to a single physical module that includes one or more battery cells to provide higher voltage and capacity. For example, the battery mentioned in the present application may include a battery module, a battery pack or the like. The battery generally includes a housing for packaging one or more battery cells. The housing can prevent liquid or other foreign objects from affecting the electrical charge or the electrical discharge of the battery cell.

The battery cell includes an electrode assembly and an electrolyte, and the electrode assembly includes a positive electrode plate, a negative electrode plate and a separator. The battery cell mainly relies on the movement of metal ions between the positive electrode plate and the negative electrode plate to work. The positive electrode plate includes a positive electrode current collector and a positive electrode active material layer. The positive electrode active material layer is applied on a surface of the positive electrode current collector. A current collector uncoated with the positive electrode active material layer protrudes from the current collector coated with the positive electrode active material layer. The current collectors uncoated with the positive electrode active material layer are stacked as a positive electrode tab. Taking a lithium ion battery as an example, the material of the positive electrode current collector may be aluminum, and the positive electrode active material may be lithium cobaltate, lithium iron phosphate, ternary lithium, lithium manganite or the like. The negative electrode plate includes a negative electrode current collector and a negative electrode active material layer. The negative electrode active material layer is applied on a surface of the negative electrode current collector. A current collector uncoated with the negative electrode active material layer protrudes from the current collector coated with the negative electrode active material layer. The current collectors uncoated with the negative electrode active material layer are stacked as a negative electrode tab. The material of the negative electrode current collector may be copper, and the negative electrode active material may be carbon, silicon or the like. The material of the separator may be PP (polypropylene), PE (polyethylene) or the like. In addition, the electrode assembly may be a winding-type structure or a stack-type structure, which is not limited in the embodiments of the present application.

The inventors note that the electrode assembly is generally electrically connected to the end cover assembly through the electrode tab, and the end cover assembly leads out the electric energy of the electrode assembly. After further research, it is found that a connection structure between the end cover assembly and the electrode assembly of the battery cell needs to occupy an internal space of the battery cell, reduce the internal capacity of the battery cell, and reduce the energy density of the battery cell.

In view of this, the present application provides a technical solution, in which an end cover assembly is used for a battery cell, the end cover assembly includes an end cover and an electrode terminal; the end cover includes an electrode lead-out hole; the electrode terminal includes a connecting part and a terminal main body, and the terminal main body protrudes from the connecting part and is at least partially accommodated in the electrode lead-out hole. The connecting part is provided with a groove. In the above solution, the terminal main body is accommodated in the electrode lead-out hole of the end cover, and the electrical energy can be led out through the terminal main body. By providing the groove on the connecting part, the electrode tab or other parts of the electrode terminal of the battery cell can be accommodated in the groove, so that the weight of the battery cell can be reduced, an internal space of the battery cell can be saved and the energy density of the battery cell can be improved.

The battery cell disclosed in the embodiments of the present application may, but may be not limited to, be applied in an electric-consuming device such as a vehicle, a ship or an aircraft. The electric-consuming device applying a power supply system including the battery cell, the batteries or the like disclosed in the present application can be used, so as to improve the stability of battery performance and improve the service life of the battery.

The embodiments of the present application provides an electric-consuming device using the battery as the power source, which can be, but is not limited to, a mobile phone, a tablet, a laptop, an electric toy, an electric tool, an electric bike, electric vehicles, a ship, a spacecraft or the like. Among them, the electric toy may include a fixed electric toy or a mobile electric toy, such as a game console, an electric car toy, an electric ship toy, an electric airplane toy or the like. The spacecraft may include an airplane, a rocket, a space shuttles, a spacecraft or the like.

For the convenience of explanation, the following embodiments take a vehicle 1000 being as the electricity-consuming device as an example to illustrate.

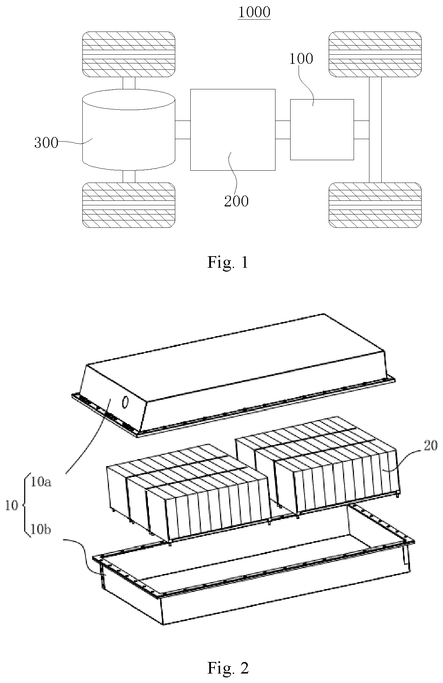

Referring to Fig. 1, Fig. 1 shows a structural schematic view of a vehicle 1000 according to some embodiments of the present application. The vehicle 1000 may be a fuel car, a gas car or a new energy car, and the new energy car can be a pure electric car, a hybrid car, a range-extended car or the like. A battery 100 may be arranged at the inside of the vehicle 1000, and the battery 100 may be arranged in the bottom, the front or the back of the vehicle 1000. The battery 100 can be used to supply power to the vehicle 1000, for example, the battery 100 can be used as an operating power source of the vehicle 1000. The vehicle 1000 may further include a controller 200 and a motor 300. The controller 200 can be used to control the battery 100 to supply power to the motor 300, for example, for satisfying the work electricity needs of the vehicle 1000 during starting, navigating and driving.

In some embodiments of the present application, the battery 100 can not only serve as an operating power source for the vehicle 1000, but also as a driving power source for the vehicle 1000, so as to replace or partially replace the fuel or the natural gas and provide the driving power for the vehicle 1000.

Referring to Fig. 2, Fig. 2 shows an exploded schematic view of the battery 100 according to some embodiments of the present application. The battery 100 includes a housing 10 and a battery cell 20. In some embodiments, the housing 10 may include an upper cover 10a and a lower cover 10b, and the upper cover 10a and the lower cover 10b cover each other. The upper cover 10a and the lower cover 10b jointly define an accommodating space for accommodating the battery cell 20. The lower cover 10b may be a hollow structure with an opening at an end, the upper cover 10a may be a plate-like structure, and the upper cover 10a covers an opening side of the lower cover 10b to jointly define the accommodating space between the upper cover 10a and the lower cover 10b. Or each of the upper cover 10a and the lower cover 10b may be a hollow structure with an opening at a side, and an opening side of the upper cover 10a covers an opening side of the lower cover 10b. Of course, the housing 10 formed by the upper cover 10a and the lower cover 10b may be in various shapes, such as cylinder or cuboid.

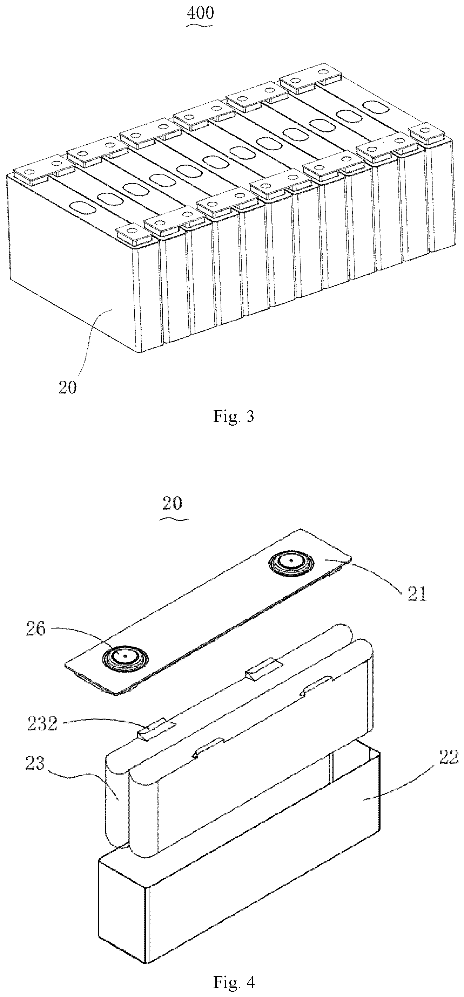

Fig. 3 shows a structural schematic view of a battery module 400 shown in Fig. 2. In the battery 100, there may be one or more battery cells 20. If there are a plurality of battery cells 20, the plurality of battery cells 20 can be connected in series, in parallel or in hybrid. The hybrid connection means that the plurality of battery cells 20 are connected in series and parallel in combination. The plurality of battery cells 20 can be directly connected in series, parallel or hybrid together, and then a whole composed of the plurality of battery cells 20 can be accommodated in the housing 10. Of course, alternatively, the battery 100 may be in a form of the battery module 400 composed of the plurality of battery cells 20 connected in series, in parallel or hybrid; then, a plurality of battery modules 400 are connected in series, in parallel or in hybrid to form a whole and are accommodated in the housing 10. The battery 100 may further include other structures, for example, the battery 100 may further include a busbar for achieving the electrical connection among the plurality of battery cells 20.

Herein, each battery cell 20 may be a secondary battery or a primary battery; or may be a lithium sulfur battery, a sodium ion battery, or a magnesium ion battery, but not limited to these. The battery cells 20 may be in a shape of cylinder, flat shape, cuboid or other shapes.

Referring to Fig. 4, Fig. 4 shows an exploded schematic view of the battery cell 20 according to some embodiments of the present application. The battery cell 20 refers to the smallest unit constituting the battery. The battery cell 20 includes a casing 21, an electrode assembly 22 and other functional parts. The end cover 21 refers to a portion that covers an opening of the casing 22 to isolate an internal environment of the battery cell 20 from the external environment. Without limitation, the shape of the end cover 21 can be adapted to the shape of the casing 22 to fit the casing 22. Optionally, the end cover 21 may be made of a material with a certain hardness and strength, such as aluminum alloy. Thus, the end cover 21 is not easily deformed when being squeezed and collided, so that the battery cell 20 can have higher structural strength, and the safety performance can also be improved. The end cover 21 may include a functional portion such as an electrode terminal 26 or the like. The electrode terminal 26 can be used to be electrically connected with the electrode assembly 23 for outputting or inputting the electric energy of the battery cell 20. In some embodiments, the end cover 21 may also be provided with a pressure-releasing mechanism for releasing the internal pressure when the pressure or temperature of inside of the battery cell 20 reaches a threshold value. The material of the end cover 21 may also be various, for example, a copper, an iron, an aluminum, a stainless steel, an aluminum alloy, a plastic or the like, which is not specifically restricted in the embodiments of the present application. In some embodiments, an insulating member can be provided inside the end cover 21, and the insulating member can be used to isolate the electrode assembly 23 in the casing 22 from the end cover 21 to reduce the risk of short circuit. Exemplarily, the insulating member may be of plastic, rubber or the like.

The casing 21 may be an assembly for forming the internal environment of the battery cell 20. Herein, an accommodating cavity 21a which is formed can be used to accommodate the electrode assembly 22, the electrolyte as well as other parts. The casing 21 may be in various shapes and sizes, such as cuboid, cylinder, hexagonal prism or the like. Specifically, the shape of the casing 21 can be determined according to the specific shape and the size of the electrode assembly 22. The casing 21 can be made of various materials, such as copper, iron, aluminum, stainless steel, aluminum alloy or plastic, which is not particularly restricted in the embodiments of the present application.

The electrode assembly 22 is a portion in which an electrochemical reaction occurs in the battery cell 20. One or more electrode assemblies 22 may be contained within the casing 21. An insulating film 24 is arranged on an outer surface of the electrode assembly 22 to provide the insulation protection between the battery cells 20. The electrode assembly 22 is mainly formed by winding or stacking the positive electrode plate, the negative electrode plate and a separator which is usually arranged between the positive electrode plate and the negative electrode plate. Parts of the positive electrode plate and the negative electrode plate that contain the active material constitute a main body of the electrode assembly 22, while parts of the positive electrode plate and negative electrode plate that do not contain active material constitute the electrode tabs 232, respectively. A positive electrode tab and a negative electrode tab can be located together at one end of the main body or located at two ends of the main body, respectively.

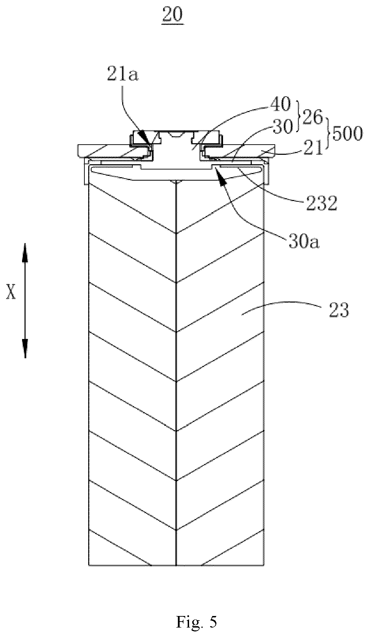

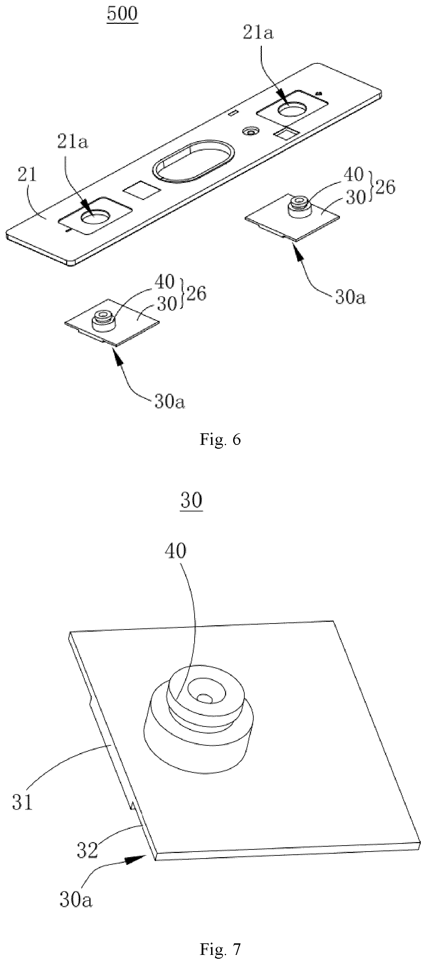

Referring to Fig. 5 and Fig. 6, Fig. 5 shows a cross-sectional schematic view of a battery cell in some embodiments of the present application; Fig. 6 shows a schematic view of an end cover assembly according to some embodiments of the present application. In a first aspect, embodiments of the present application provide an end cover assembly 500 for a battery cell 20 including an end cover 21 and an electrode terminal 26. The end cover 21 includes an electrode lead-out hole 21a. The electrode terminal 26 includes a connecting part 30 and a terminal main body 40. The terminal main body 40 protrudes from the connecting part 30 and is at least partially accommodated in the electrode lead-out hole 21a. The connecting part 30 is provided with a groove 30a.

The groove 30a is formed on a side of the electrode assembly 23 facing the battery cell 20, or on a side away from the electrode assembly 23 of the connecting part 30, or on a side face of the connecting part 30, or on a side of the connecting part 30 facing the electrode assembly 23 and a side of the connecting part 30 away from the electrode assembly 23. The shape of the groove 30a may be U-shaped, L-shaped, annular or other shapes. The electrode tab 232 of the electrode assembly 23 is accommodated in the groove 30a to achieve the electrical connection between the electrode tab 232 and the connecting part 30. Alternatively, a connecting plate is arranged in the groove 30a, or both the connecting plate and the electrode tab 232 are accommodated in the groove 30a, and the electrode tab 232 is electrically connected to the connecting part 30 through the connecting plate.

In the above solution, the terminal main body 40 is accommodated in the electrode lead-out hole 21a of the end cover 21, and the electrical energy can be led out to an exterior of the battery cell 20 through the terminal main body 40. By providing the groove 30a on the connecting part 30, the electrode tab 232 or other parts of the battery cell 20 can be accommodated in the groove 30a, so that the weight of the battery cell 20 can be reduced, an internal space of the battery cell 20 can be saved and the energy density of the battery cell 20 can be improved.

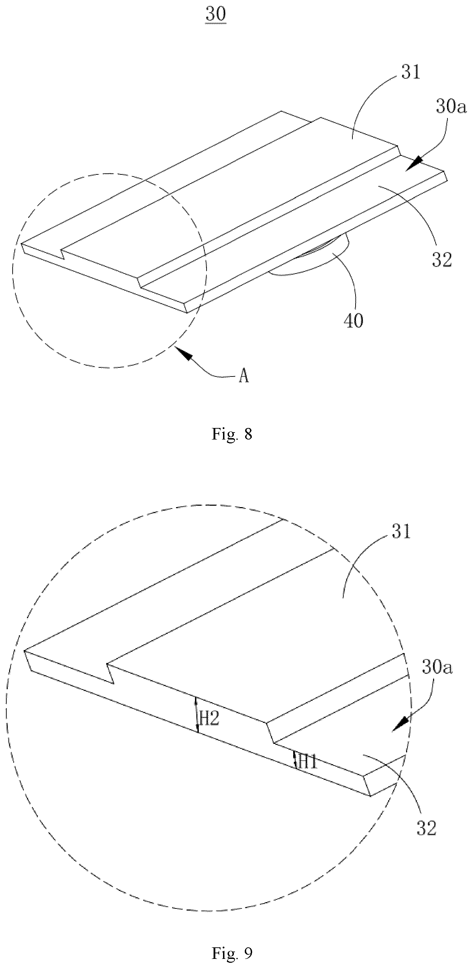

Referring to Fig. 7 to Fig. 9, Fig. 7 shows a schematic view of a connecting part according to some embodiments of the present application; Fig. 8 shows a structural schematic view of a connecting part shown in Fig. 6 at another angle; Fig. 9 shows an enlarged schematic view of part A shown in Fig. 8. In some embodiments, the connecting part 30 includes a first connecting sub-part 31 and a second connecting sub-part 32, the second connecting sub-part 32 is connected between the terminal main body 40 and the first connecting sub-part 31, and a thickness H1 of the second connecting sub-part 32 is smaller than a thickness H2 of the first connecting sub-part 31 to form the groove 30a.

The second connecting sub-part 32 is arranged on a side or two sides of the first connecting part 31, and the groove 30a is L-shaped; or the second connecting sub-part 32 is arranged around the first connecting sub-part 31, and the groove 30a is annular. It should be noted that the feature "the second connecting sub-part 32 is connected between the terminal main body 40 and the first connecting sub-part 31"means that a projection of the first connecting sub-part 31 at least partially overlaps a projection of the terminal main body 40 in the thickness direction X of the end cover 21; the feature "thickness H1 of the second connecting sub-part 32" means a size of the second connecting sub-part 32 in the thickness direction X of the end cover 21, and the feature "thickness H2 of the first connecting sub-part 31" means a size of the first connecting sub-part 31 in the thickness direction X of the end cover 21. Since the thickness H1 of the second connecting sub-part 32 is smaller than the thickness H2 of the first connecting part 31, it means that a region of the second connecting sub-part 32 in the connecting part 30 is thinned, so as to form the groove 30a.

In the above solution, since the thickness of the second connecting sub-part 32 is smaller than the thickness of the first connecting part 31, the terminal main body 40 is connected to the first connecting sub-part 31 with a relatively large thickness, so that the connection strength between the terminal main body 40 and the connecting part 30 can be improved and the stability of the terminal main body 40 can be improved.

In some embodiments, the groove 30a is formed on a surface of the connecting part 30 facing the electrode assembly 23 of the battery cell 20. The groove 30a may be arranged on a side of the connecting part 30, or at a middle portion or another region of the connecting part 30. Since the electrode tab 232 is located on a side of the electrode assembly 23 facing the end cover assembly 500, the electrode tab 232 can be bent, then directly accommodated in the groove 30a, and connected to the second connecting sub-part 32. Alternatively, the connecting plate may be accommodated in the groove 30a, and then the electrode tab 232 is connected to the electrode terminal 26 through the connecting plate. The groove 30a is formed on the surface of the connecting part 30 facing the electrode assembly 23 of the battery cell 20, so that the electrode tab 232 need not bypass the connecting part 30 and then be connected to a side of connecting part 30 away from the electrode assembly 23, thus, it can facilitate the electrode tab or other parts of the electrode assembly being accommodated in the groove, facilitate the process preparation, and improve the production efficiency.

In some embodiments, a surface of the first connecting sub-part 31 facing the end cover 21 is flush with a surface of the second connecting sub-part 32 facing the end cover 21. In other words, the groove 30a is not formed on a side of the connecting part 30 away from the electrode assembly 23, but on a side of the connecting part 30 facing the electrode assembly 23.

In the above solution, the surface of the connecting part 30 facing the end cover 21 is a flat surface, so that the support capacity of the connecting part 30 for the end cover 21 can be improved and the strength of the end cover assembly 500 can be improved.

Optionally, the second connecting sub-part 32 is recessed in a direction towards the end cover 21 to form the groove 30a.

In some embodiments, in a thickness direction X of the end cover 21, a thickness of the second connecting sub-part 32 is H1, a thickness of the first connecting sub-part 31 is H2, and 1/5 H2≤H1≤4/5 H2. If the thickness of the second connecting sub-part 32 is too small, it will affect the structural strength of the second connecting sub-part 32; if the thickness of the second connecting sub-part 32 is too large, it will reduce the accommodating space of the electrode tab 232 or a connecting plate; and if the internal space of the battery cell 20 is not changed too much, the energy density will not increase too much.

In the above solution, the thickness of the second connecting sub-part 32 is appropriate, so that the weight and the internal capacity of the battery cell 20 can be reduced and the strength of the second connecting sub-part 32 can be ensured.

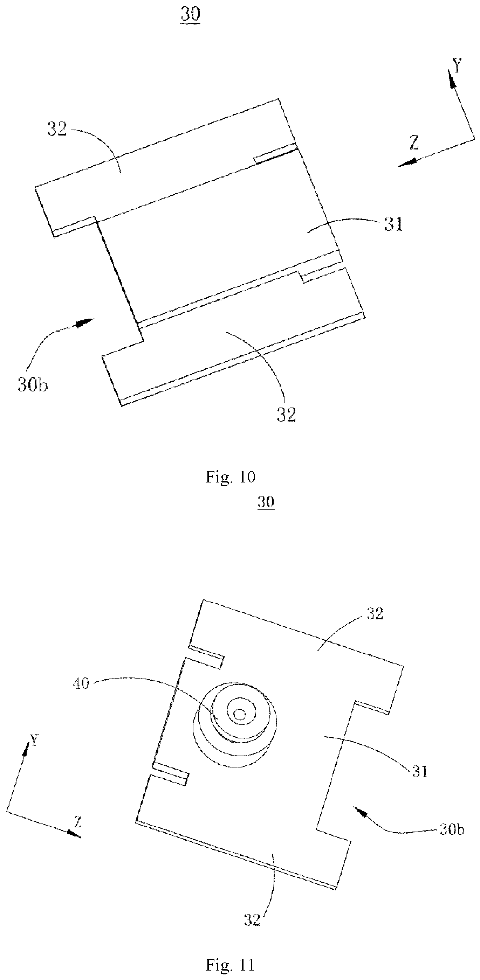

Referring to Fig. 10 and Fig. 11, Fig. 10 shows a schematic view of a connecting part according to some other embodiments of the present application; Fig. 11 shows a structural schematic view of a connecting part shown in Fig. 10 at another angle. In some embodiments, the first connecting sub-part 31 and the second connecting sub-part 32 are arranged in a first direction Y; at least one end of the second connecting sub-part 32 extends beyond the first connecting sub-part 31 in a second direction Z, and each two of the first direction Y, the second direction Z and a thickness direction X of the end cover 21 are perpendicular to each other.

Any end of the second connecting sub-part 32 in the second direction Z may extend beyond the first connecting sub-part 31, or both two opposite ends of the second connecting sub-part 32 in the second direction Z may extend beyond the first connecting sub-part 31, thereby forming a notch between the first connecting sub-part 31 and the second connecting sub-part 32.

In the above solution, at least one end of the second connecting sub-part 32 extends beyond the first connecting sub-part 31, so that the weight of the connecting part 30 can be further reduced, the internal space of the battery cell 20 can be save, and the energy density of the battery cell 20 can be improved.

In some embodiments, two second connecting sub-parts 32 are provided, which are located on two sides of the first connecting sub-part 31 in the first direction Y, respectively; the electrode terminal 26 is provided with a weight-reducing groove 30b, which is located on a side of the first connecting sub-part 31 in the second direction Z and is formed and enclosed by the first connecting sub-part 31 and the two second connecting sub-parts 32.

In the thickness direction X of the end cover 21, a projection of the weight-reducing groove 30b may not overlap with projections of the second connecting sub-parts 32. The weight-reducing groove 30b is formed by digging a hole at an end of the first connecting sub-part 31 in the second direction Z. Alternatively, a projection of the weight-reducing groove 30b may overlap with one of projections of the second connecting sub-parts 32, or partially overlap with projections of both two second connecting sub-parts 32.

In the above solution, two second connecting sub-parts 32 are located on the two sides of the first connecting sub-part 31 in the first direction Y, respectively, so that both two electrode assemblies 23 can be connected to the end cover assembly 500, and the energy density of the battery cell 20 can be improved. The weight-reducing groove 30b is formed and enclosed by the first connecting sub-part 31 and the two second connecting sub-parts 32, which can not only reduce the weight of the end cover assembly 500, save the internal space of the battery cell 20, further improve the energy density of the battery cell 20, but also provide more connection space for the parts connected to the second connecting sub-part 32.

In some other embodiments, the weight-reducing groove 30b may not be formed at an end of the connecting part 30, but may be formed at a middle portion or another region of the connecting part 30.

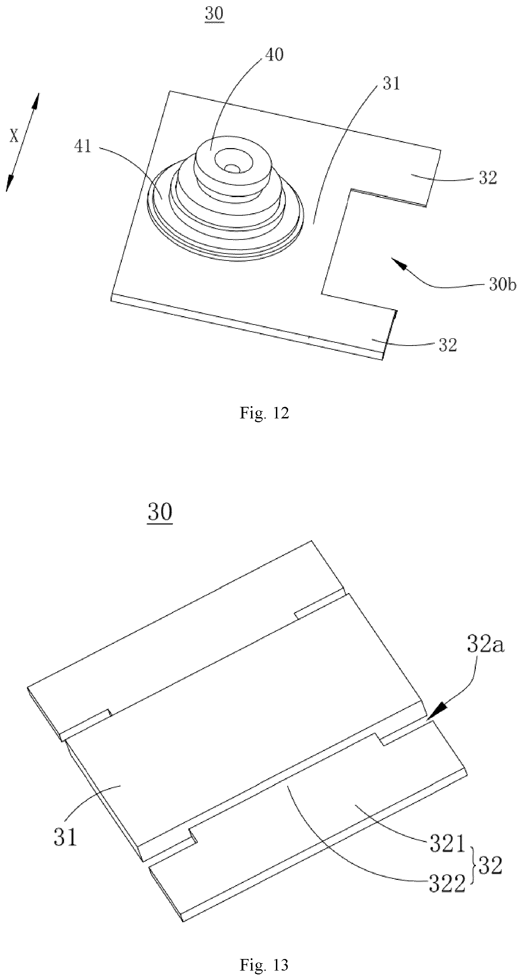

Fig. 12 shows a schematic view of a connecting part according to some other embodiments of the present application. As shown in Fig. 12, in some embodiments, the end cover assembly 500 further includes a sealing member 41, which is arranged around the terminal main body 40. At least a portion of the sealing member 41 is clamped between the end cover 21 and the connecting part 30, and a projection of the weight-reducing groove 30b does not overlap with a projection of the sealing member 41 in the thickness direction X of the end cover 21.

The sealing member 41 can be made of a compressible material such as rubber or foam. The sealing member 41 is arranged between the end cover 21 and the connecting part 30 in a compressed state. The sealing member 41 can enhance the sealing effect between the end cover 21 and the electrode terminal 26, reduce the probability of the leakage of the battery cell 20, and improve the safety performance of the battery cell 20. In the thickness direction X of the end cover 21, the projection of the weight-reducing groove 30b does not overlap with the projection of the sealing member 41, in other words, the sealing member 41 is not arranged on a portion of the connecting part 30 corresponding to the weight-reducing groove 30b, so that the compression amount of the sealing member 41 can be improved and the safety performance of the battery cell 20 can be further enhanced.

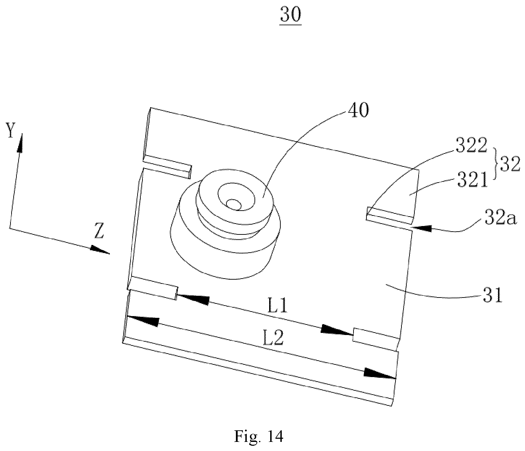

Fig. 13 shows a schematic view of a connecting part according to some other embodiments of the present application; Fig. 14 shows a structural schematic view of a connecting part shown in Fig. 13 at another angle. Referring to Fig. 13 and Fig. 14, in some embodiments, the connecting part 30 includes an electrode tab connecting segment 321 and a fusing segment 322, the fusing segment 322 is located between the electrode tab connecting segment 321 and the terminal main body 40, and the electrode tab connecting segment 321 is configured to connect an electrode tab 232 of an electrode assembly 23.

The fusing segment 322 is located on a side of the second connecting sub-part 32 close to the first connecting sub-part 31. By forming a through hole 32a on the side of the second connecting sub-part 32 close to the first connecting sub-part 31, a portion of the second connecting sub-part 32 corresponding to the through hole 32a in the second direction Z is the fusing segment 322. Since a length L1 of the fusing segment 322 in the second direction Z is smaller than a length L2 of the electrode tab connecting segment 321 in the second direction Z, an overcurrent area of the fusing segment 322 can be reduced, and the fusing segment 322 is easy to be melt. It can be understood that the through hole 32a described above can be directly formed at the end of the second connecting sub-part 32 in the second direction Z, so as to facilitate the process preparation. Or the through holes 32a may be formed at two ends of the second connecting sub-part 32 in the second direction Z, respectively. Alternatively, the through holes 32a may be formed on a middle portion or another region of the first connecting sub-part 31 close to the second connecting sub-part 32, and the number of through holes 32a may be one or more.

The electrode tab 232 may be directly soldered to the electrode tab connecting segment 321, or connected to the electrode tab connecting segment 321 through the connecting plate.

In the above solution, by arranging the fusing segment 322, the battery cell 20 can be melted in time under an external short working condition, which can be less prone to fire and explosion, and improve the safety performance of the battery cell 20.

In some embodiments, the end cover assembly 500 further includes a sealing member 41, which is arranged around the terminal main body 40, at least a portion of the sealing member 41 is clamped between the end cover 21 and the connecting part 30, and a projection of the sealing member 41 does not overlap with a projection of the groove 30a in a thickness direction X of the end cover 21.

As an example, the groove 30a is formed on a side of the second connecting sub-part 32 away from the end cover, and the projection of the sealing member 41 does not overlap with a projection of the second connecting sub-part 32.

The sealing member 41 can be made of a compressible material such as rubber or foam. The sealing member 41 is arranged between the end cover 21 and the connecting part 30 in a compressed state, so as to enhance the sealing effect between the end cover 21 and the electrode terminal 26, reduce the probability of the leakage of the battery cell 20, and improve the safety performance of the battery cell 20.

In the thickness direction X of the end cover 21, the projection of the sealing member 41 does not overlap with the projection of the groove 30a. In other words, the sealing member 41 is not located at the portion of the connecting part 30 corresponding to the groove 30a, and is compressed by the portion of the connecting part 30 with a relatively large thickness, so that the compression amount of the sealing member 41 can be improved, the probability of the leakage of the battery cell 20 can be further reduced, and the safety performance of the battery cell 20 can be improved.

Optionally, in the thickness direction X of the end cover 21, the projection of the sealing member 41 falls within a range of the projection of the first connecting sub-part 31, and the sealing member 41 is clamped between the end cover 21 and the first connecting sub-part 31.

In a second aspect, embodiments of the present application provide a battery cell 20, including a casing 22, an electrode assembly 23 and the end cover assembly 500 according to any one of the embodiments as described above. The casing 22 is provided with an opening; the electrode assembly 23 is accommodated in the casing 22; the end cover 21 is configured to cover the opening, and the connecting part 30 is located inside the battery cell 20.

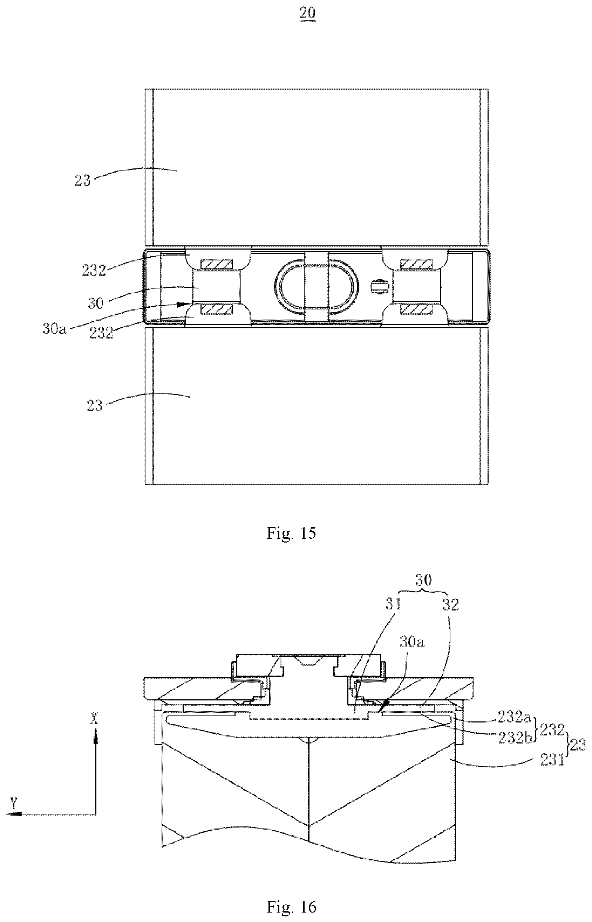

As shown in Fig. 15, Fig. 15 shows a top view of a battery cell according to some embodiments of the present application. In some embodiments, the electrode assembly 23 includes an electrode tab 232, which is connected to the connecting part 30, and at least a portion of the electrode tab 232 is accommodated in the groove 30a. A portion of the electrode tab 232 can be accommodated in the groove 30a or the whole electrode tab 232 can be accommodated in the groove 30a, so that the weight of the battery cell 20 can be reduced, the space occupied by the electrode tab 232 can be saved, and the energy density of the battery cell 20 can be improved.

As shown in Fig. 16, Fig. 16 is a partial schematic view of a battery cell according to some embodiments of the present application. In some embodiments, the electrode tab 232 includes a horizontal segment 232b directly connected to the connecting part 30, and a thickness of the horizontal segment 232b is smaller than or equal to a depth of the groove 30a in a thickness direction X of the end cover 21.

The electrode assembly 23 includes a main body part 231 and the electrode tab 232. After the electrode tab 232 is bent, the electrode tab 232 includes a vertical segment 232a and a horizontal segment 232b. The vertical segment 232a extends in a direction from the main body part 231 to the end cover 21, and the horizontal segment 232b is bent from the vertical segment 232a in the first direction Y and towards a direction close to the first connecting sub-part 31. The horizontal segment 232b is connected to the second connecting sub-part 32.

In the above solution, compared with the electrode tab 232 that is not bent, the electrode tab 232 that is bent to form the horizontal segment 232b is connected to the connecting part 30, so that a space occupied by the electrode tab 232 can be saved. Moreover, the horizontal segment 232b is directly connected to the connecting part 30, so that the connecting plate can be omitted, the space can be further saved, and the cost can be reduced.

In a third aspect, embodiments of the present application provide a battery 100 including the battery cell 20 according to any one of the embodiments as described above.

In a fourth aspect, embodiments of the present application provide an electric-consuming device including the battery cell 20 according to any one of the embodiments as described above, which is configured to supply electric power.

According to some embodiments of the present application, the present application provides the end cover assembly 500 for the battery cell 20. The end cover assembly 500 includes the end cover 21 and the electrode terminal 26, and the end cover 21 is provide with the electrode lead-out hole 21a; The electrode terminal 26 includes the connecting part 30 and the terminal main body 40. The terminal main body 40 protrudes from the connecting part 30 and is at least partially accommodated in the electrode lead-out hole 21a. The groove 30a is provided on the surface of the connecting part 30 facing the electrode assembly 23 of the battery cell 20. The electrode tab 232 is accommodated in the groove 30a and directly connected to the second connecting sub-part 32. The connecting part 30 includes the first connecting sub-part 31 and the second connecting sub-part 32. The second connecting sub-part 32 is connected between the terminal main body 40 and the first connecting sub-part 31. The thickness H1 of the second connecting sub-part 32 is smaller than the thickness H2 of the first connecting sub-part 31 to form the groove 30a.

It should be noted that in the absence of conflicts, the embodiments and the features in the embodiments of the present application can be combined with one another.

At last, it should be noted that the above embodiments are only used to illustrate the technical solutions of the present application, but not to limit the technical solutions; although the present application has been described in detail with reference to the embodiments as described above, those skilled in the art should understand that: it is still possible to modify the technical solutions recited in the embodiments as described above, or equivalently replace some of the technical features, but these modifications or replacements do not cause the essence of the corresponding technical solutions to deviate from the gist and scope of the technical solutions of the embodiments of the present application.

## Claims

1. An end cover assembly for a battery cell, **characterized by** comprising
an end cover, comprising an electrode lead-out hole; and
an electrode terminal, comprising a connecting part and a terminal main body, the terminal main body protruding from the connecting part and being at least partially accommodated in the electrode lead-out hole; and
the connecting part being provided with a groove.

2. The end cover assembly according to claim 1, **characterized in that** the connecting part comprises a first connecting sub-part and a second connecting sub-part, the second connecting sub-part is connected between the terminal main body and the first connecting sub-part, and a thickness of the second connecting sub-part is smaller than a thickness of the first connecting sub-part to form the groove.

3. The end cover assembly according to claim 2, **characterized in that** the groove is provided on a surface of the connecting part facing an electrode assembly of the battery cell.

4. The end cover assembly according to claim 3, **characterized in that** a surface of the first connecting sub-part facing the end cover is flush with a surface of the second connecting sub-part facing the end cover.

5. The end cover assembly according to any one of claims 2 to 4, **characterized in that**, in a thickness direction of the end cover, a thickness of the second connecting sub-part is H1, a thickness of the first connecting sub-part is H2, and 1/5 H2≤H1≤4/5 H2.

6. The end cover assembly according to any one of claims 2 to 4, **characterized in that** the first connecting sub-part and the second connecting sub-part are arranged in a first direction; at least one end of the second connecting sub-part extends beyond the first connecting sub-part in a second direction, and each two of the first direction, the second direction and a thickness direction of the end cover are perpendicular to each other.

7. The end cover assembly according to claim 6, **characterized in that** the connecting part comprises two second connecting sub-parts, and the two second connecting sub-parts are located on two sides of the first connecting sub-part in the first direction, respectively; the electrode terminal is provided with a weight-reducing groove, which is located on a side of the first connecting sub-part in the second direction and is formed and enclosed by the first connecting sub-part and the two second connecting sub-parts.

8. The end cover assembly according to claim 7, **characterized by** further comprising a sealing member, which is arranged around the terminal main body, wherein at least a portion of the sealing member is clamped between the end cover and the connecting part, and a projection of the weight-reducing groove does not overlap with a projection of the sealing member in the thickness direction of the end cover.

9. The end cover assembly according to any one of claims 1 to 8, **characterized in that** the connecting part comprises an electrode tab connecting segment and a fusing segment, the fusing segment is located between the electrode tab connecting segment and the terminal main body, and the electrode tab connecting segment is configured to connect an electrode tab of an electrode assembly.

10. The end cover assembly according to any one of claims 1 to 9, **characterized in that** the end cover assembly further comprises a sealing member, which is arranged around the terminal main body, at least a portion of the sealing member is clamped between the end cover and the connecting part, and a projection of the sealing member does not overlap with a projection of the groove in a thickness direction of the end cover.

11. A battery cell, **characterized by** comprising
a casing, provided with an opening;
an electrode assembly, accommodated in the casing; and
the end cover assembly according to any one of claims 1 to 10, wherein the end cover is configured to cover the opening, and the connecting part is located inside the battery cell.

12. The battery cell according to claim 11, **characterized in that** the electrode assembly comprises an electrode tab, which is connected to the connecting part, and at least a portion of the electrode tab is accommodated in the groove.

13. The battery cell according to claim 12, **characterized in that** the electrode tab comprises a horizontal segment directly connected to the connecting part, and a thickness of the horizontal segment is smaller than or equal to a depth of the groove in a thickness direction of the end cover.

14. A battery, **characterized by** comprising the battery cell according to any one of claims 11 to 13.

15. An electric-consuming device, **characterized by** comprising the battery cell according to any one of claims 11 to 13, which is configured to supply electric power.
